# EUROPÄISCHE PATENTSCHRIFT

(11) **EP 1 336 643 B1**
(45) Veröffentlichungstag und Bekanntmachung des Hinweises auf die Patenterteilung: **24.09.2003**
(21) Anmeldenummer: 02008603.9
(22) Anmeldetag: 17.04.2002
(51) Int. Cl.: C08L 83/04, B29C 33/64

(54) **Verwendung von lösemittel-, wasser- und emulgatorfreien Organopolysiloxanformulierungen als Gleitmittel für profilierte Dichtungen**
Use of solvent-, water- and emulsifier-free compositions of organopolysiloxanes as lubricant for profiled sealings
Usage de compositions d'organopolysiloxanes sans solvant, sans eau et sans émulsifiant comme agent lubrifiant pour éléments d'étanchéité profilés

(43) Veröffentlichungstag der Anmeldung: 20.08.2003
(73) Patentinhaber: Goldschmidt AG, 45127 Essen (DE)
(72) Erfinder: Dörrbecker, Fred, 45147 Essen (DE); Schommer, Jürgen, 45149 Essen (DE); Lammerting, Helmut, 58456 Herbede (DE)

(56) Entgegenhaltungen:
- DE-A- 3 821 908
- DE-A- 4 110 393
- US-A- 5 115 007

## Beschreibung

Gegenstand der Erfindung ist die Verwendung von lösemittel-, wasser- und emulgatorfreien Zubereitungen zur reibungsvermindernden Beschichtung von gummielastischen Profilen, enthaltend ein härtbares Siloxan und als Träger niedermolekulare flüchtige Siloxane.

Wasserdichte oder feuchtigkeitsdichte und/oder raschen Luft- bzw. Gasaustausch verhindernde Dichtungen werden für eine Vielzahl von Anwendungen benötigt, insbesondere im Bausektor für die Abdichtung von Fenstern und Türen. Derartige profilierte Dichtungen sind insbesondere im funktionellen Dichtungsbereich bezüglich Form und Werkstoff sehr vielfältig gestaltet.

Gemeinsam ist allen Profil-Dichtungen, dass sie unter Anwendung einer der bekannten Befestigungstechniken an dem Träger angebracht werden, an dem die vorgesehene Dichtwirkung hervorgerufen werden soll.

Eine der am häufigsten angewandten Befestigungstechniken besteht darin, dass vorgefertigte profilierte Dichtungen in die entsprechenden, dafür vorgesehenen Profile von Trägern wie beispielsweise Fensterrahmen und Türzargen eingepresst werden.

Um eine möglichst reibungsfreie und kraftsparende Montage zu ermöglichen, werden die profilierten Dichtungen üblicherweise an den Oberflächen, mit reibungsvermindernden Überzügen beschichtet.

In den US-A-4,572,875 und US-A-4,572,871 beschriebenen Verfahren werden dem Gleitmittel Silikone oder Fluorharze zugesetzt. Derartige Lacke haben einmal den Nachteil, dass es sich bei den Silikonen um Öle handelt, von denen bekannt ist, dass sie als Trennmittel wirken. Derartige Trennmittel werden aufgrund ihrer charakteristischen Stoffeigenschaften relativ leicht verschleppt und können beispielsweise während der Montage und beim anschließenden Lackieren von Zargen, Karosserieteilen etc. zu Schwierigkeiten führen. Der Einsatz und Gebrauch von nicht festgebundenen Silikonölen ist daher nicht erwünscht.

Gemäß US-A-6,057,042 werden Lösungsmittel enthaltende mindestens zweikomponentige Silikonformulierungen auf die Elastomeren aufgetragen welche bei Raumtemperatur innerhalb von 24 Stunden das Lösungsmittel abdunsten und vernetzen. Die resultierende gehärtete Schicht soll nicht klebrig und wasserabweisend sein, eine gute Haftung auf insbesondere EPDM-Oberflächen haben und aufgrund ihrer guten Gleitwirkung werden die beschichteten Elastomere auch für Dichtungen im Konstruktionsbereich vorgeschlagen. Auch DE 4 110 393 A betrifft lösungsmittel haltige Zubereitungen zur Beschichtung von Gummi. Diese festen Filme erreichen jedoch nicht die reibungsverringernde Wirkung der flüssigen, Silikonöl enthaltenden Formulierungen.

Eine Aufgabe der Erfindung war es deshalb, Gleitmittelformulierungen für profilierte Dichtungen zur Verfügung zu stellen, welche die Anforderungen bezüglich Gleitwirkung erfüllen, jedoch später nach dem Einbau der Fenster und Türen einen festen Film ausbilden, der nicht mehr verschleppt und aufgrund von Witterungseinflüssen abgewaschen werden kann und somit auch gleichzeitig einen dauerhaften Schutz vor Feuchtigkeit bildet und die Dichtigkeit des Profils verbessert.

Diese Aufgabe wurde gelöst durch Verwendung von lösemittel-, wasser- und emulgatorfreien Zubereitungen zur reibungsvermindernden Beschichtung von gummielastischen Profilen, enthaltend ein härtbares Siloxan und als Träger niedermolekulare flüchtige Siloxane.

Ein Gegenstand der Erfindung ist die Verwendung von lösemittel-, wasser- und emulgatorfreien Zubereitungen zur reibungsvermindernden Beschichtung von gummielastischen Profilen, enthaltend
(a) 0,5 bis 35, vorzugsweise 2 bis 5 Gew.-Teilen eines gegebenenfalls in Gegenwart eines Katalysators härtbaren Siloxans und
(b) 65 bis 99, 85 vorzugsweise 95 bis 98 Gew.-Teilen niedermolekularen flüchtigen Siliconölen der allgemeinen Formel (I) und/oder cyklische Verbindungen der allgemeinen Formel (Ia) 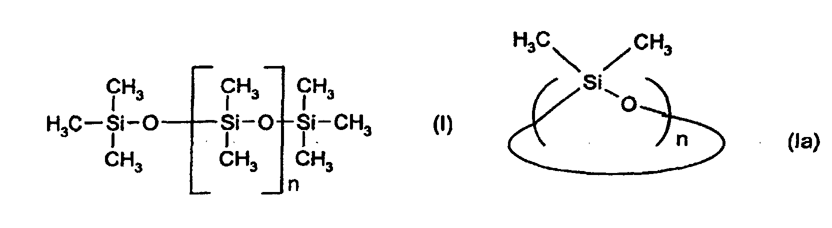 wobei
   - n: eine Zahl von 2 bis 10, für die linearen Verbindungen und für die cyclischen Verbindungen vorzugsweise > 4, ist und gegebenenfalls
(c) üblichen Hilfs- und Zusatzstoffen.

Als übliche Hilfs- und Zusatzstoffe können die erfindungsgemäßen Zusammensetzungen lösliche Farbstoffe, Farbpigmente, Mattierungssmittel und andere übliche Hilfsstoffe enthalten. Bevorzugte Mattierungsmittel sind solche auf der Basis von Kieselsäure, ein besonders bevorzugtes schwarzes Farbpigment ist Russ.

Die erfindungsgemäßen Zubereitungen sind anwendbar für die üblicherweise vewendeten Materialien der Dichtungsprofile wie Elastomere aus natürlichen oder synthetischen Werkstoffen wie Gummi, EPDM.

Die Aufbringung auf die Substrate erfolgt durch die gängigen Verfahren wie Rollen, Rakeln und insbesondere Tauchen oder Sprühen.

Die erfindungsgemäß mitverwendbaren härtbaren Siloxane (a) sowie die verschiedenartigen Härtungsbedingungen sind in der Literatur beschrieben, insbesondere auch in Walter Noll, "Chemie und Technologie der Silikone", Verlag Chemie GmbH, Weinheim, 1960.

Des Weiteren entstehen gehärtete Siloxanprodukte auch aus der Additionsreaktion von α,ω-Vinylsiloxanen und Wasserstoffsiloxanen. Als Katalysator dient hier z. B. Hexachloroplatinsäure.

Unter anderem sind auch RTV (room temperature vulcanizable) - Kautschuksysteme geeignet. Bestandteile solcher Systeme sind z. B. alpha,omega-Siloxandiole mittlerer Viskosität und als Vernetzer z. B. Methyltriacethoxysilan sowie auch Ethoxysilane. Diese Systeme können mit Kondensationskatalysatoren, wie z. B. Dibutylzinndilaurat, zu einem migrationsstabilen Film aushärten.

Zur Herstellung von RTV-vernetzten Systemen werden auch Alkoxypolysiloxane und Kieselester verwendet, die dann ebenfalls mit alpha,omega-Siloxandiolen gehärtete und elastische Filme bilden. Als Kondensationskatalysator wird auch hier Dibutylzinndilaurat verwendet.

Die als Vernetzer mitverwendbaren Kieselsäureester sind Verbindungen der allgemeinen Formel

(R²O)_{c}SiO_{(4-c)/2},

worin
- R²: ein C₁₋₄-Rest, vorzugsweise ein Ethylrest und
- c: einen Wert von 1,8 bis 4 hat. Liegt der Kieselsäureester monomer vor, hat c den Wert 4 und sinkt mit steigendem Polymerisationsgrad auf Werte kleiner als 4.

Die erfindungsgemäß mitverwendeten Kieselsäureester haben vorzugsweise einen Wert von c = 2,1 bis 4,0.

Als Träger (b) werden niedermolekulare Siliconöle verwendet, die zunächst die Gleitwirkung des noch flüssig vorliegenden Films unterstützen, aber auch später aufgrund ihrer hohen Flüchtigkeit verdunsten.

Dieses sind lineare Verbindungen der allgemeinen Formel (I) und/oder cyklische Verbindungen der allgemeinen Formel (Ia) wie Decamethylpentacyclosiloxan 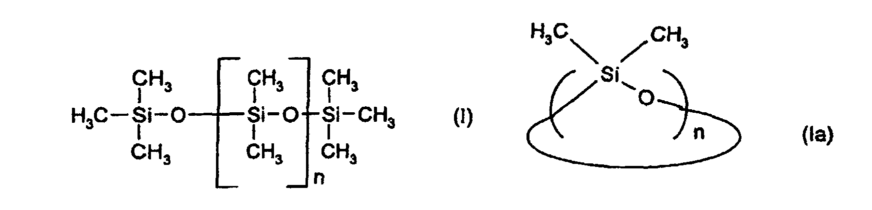 wobei
- n: eine Zahl von 2 bis 10, für die linearen Verbindungen vorzugsweise 2 bis 5 und für die cyclischen Verbindungen vorzugsweise > 4, besonders 5 und/oder 6, ist.

Cyclische und lineare Siloxane können in Mischung untereinander, vorzugsweise aber in Mischung miteinander verwendet werden.

Für die praktische Anwendung ist es wichtig, dass die Gleitmittelformulierung einen Flammpunkt > 55 °C aufweist, wodurch somit der Gehalt an sehr niedrigmolekularen Siloxanen limitiert wird.

Die erfindungsgemäße Gleitmittelformulierung gemäß a + b und gegebenenfalls c kann im Tauch- oder Sprühverfahren appliziert werden. Um einen äußerst dünnen Film zu erreichen, ist ein Sprühauftrag mit extrem feinen Düsen bevorzugt. Aufgrund der hervorragenden Verlaufs- und Vernetzungsfähigkeit der niedermolekularen Siloxane entsteht ein homogener und extrem dünner Gleitmittelfilm. Dieser bleibt zunächst bis zur Verarbeitung des beschichteten Gummiprofils flüssig, so dass das Einziehen und Eingleiten in Fenster- und Türrahmen problemlos möglich ist. In der Regel wird das endlos gefertigte beschichtete Gummiprofil aufgerollt und in Folien verpackt. Mit dieser Maßnahme wird verhindert, dass der leicht flüchtige Träger schon vorzeitig verdunsten kann und eine noch nicht gewünschte Aushärtung des Films erfolgt.

Nach dem Einbau der Fenster und Türen, die die beschichteten Gummiprofile aufweisen, trocknet der Siliconfilm, so dass noch ein grifffester migrationsstabiler Film zurückbleibt. Dieser Film verleiht dem Gummiprofil ein seidenglänzendes Finish, dient gleichzeitig als Wetterschutz und kann somit auch die Dichtungsfähigkeit des gesamten Profils verbessern.

### Anwendungsbeispiele:

### Beispiel 1:

Es wurden als härtbares Siloxan (a):
3 Gew.-Teile eines alpha,omega-Vinylsiloxans (0,28 mmol Vinyl/g)
0,15 Gew.-Teile eines Methylhydrogenpolysiloxans (10 mmol SiH/g)
0,002 % Hexachloroplatin (IV)-säure-6-hydrat
in einem Träger (b) bestehend aus:
20 % Dimethylpolysiloxan der allgemeinen Formel (I) mit einem Durchschnittswert von n = 4 und 76 % Decamethylpentacyclosiloxan gelöst. Für einen Beschichtungsversuch wurde ein endlos gefertigtes EPDM-Profil verwendet.

Die erfindungsgemäße Zubereitung wurde in einer Sprühkammer, durch die der EPDM-Streifen mit einer Geschwindigkeit von 20 m/Min. gezogen wurde, gleichmäßig beschichtet. Anschließend wird das beschichtete EPDM-Profil auf einer Spule aufgewickelt. Diese Spule wurde in einer Polyethylenfolie verpackt und eingeschweißt. Zu einem späteren Zeitpunkt wurde dieses beschichtete Gummiprofil in einen Holzfensterrahmen eingezogen. Es war eine sehr gute Gleitwirkung erkennbar. Dieses eingebaute Gummiprofil wurde nach 14 Tagen hinsichtlich seiner Filmbeschaffenheit bewertet. Die Siliconbeschichtung zeigt eine grifffeste und trockene Beschaffenheit. Es war kein flüssiges Silicon mehr erkennbar.

### Beispiel 2:

Es wurden als härtbares Siloxan (a):
1,5 Gew.-Teile α,ω-Methylsiloxandiol mit einem Molekulargewicht von 6.500
3,0 Gew.-Teile eines alkoxyfunktionellen Polysiloxans der Formel (CH₃)_{1,5}(C₂H₅O)_{0,75}SiO_{0,88}
0,5 Gew.-Teile eines Kieselesters der Formel (C₂H₅O)_{2,4}SiO_{0,8}
0,1 % Dibutylzinndilaurat
in einem Träger (b) mit:
20 % eines Dimethylpolysiloxans der Formel (I) mit einem Durchschnittswert von n = 3,5 und 75 % Decamethylpentacyclosiloxan gelöst.

Mit dieser erfindungsgemäßen Zubereitung wurde ein Beschichtungsversuch in analoger Weise zu Beispiel 1 durchgeführt. Beim Einziehen des beschichteten Profils war ebenfalls ein flüssiger Film erkennbar, so dass ein sehr leichtes Einziehen des Profils in die Fenster- und Türrahmen erkennbar war.

Nach 14 Tagen erfolgte eine sensorische Überprüfung des beschichteten Gummiprofils. Es war ein trockener und migrationsstabiler Film erkennbar.

### Vergleichsbeispiel:

In analoger Weise zu Beispiel 1 wurde ein Beschichtungsversuch mit einer Siliconölemulsion durchgeführt. Die Siliconölemulsion vom Stand der Technik enthält 35 % eines Dimethylpolysiloxans der Viskosität 350 cP und 5 % eines nichtionischen Emulgators. Die in analoger Weise beschichteten Profile mussten nach der Beschichtung mit Pressluft abgeblasen werden, um eine gleichmäßige Verteilung zu garantieren.

Danach wurde der beschichtete EPDM-Streifen auf einer Spule aufgerollt und in gleicher Weise in einer Folie verpackt und eingeschweißt. Beim Einziehen dieser Folie in Fenster- und Türrahmen war ein sehr fettiger, flüssig vorliegender Siliconfilm erkennbar, der eine gute Gleitwirkung zeigte und das Eingleiten in die Fensterrahmen möglich machte.

Nach 14 Tagen wurde eine sensorische Überprüfung des beschichteten Profils vorgenommen. Es zeigte sich ein fettiger Film. Dieser Film enthält naturgemäß die Anteile des verwendeten Emulgators. An den Fensterrahmen waren bereits Siliconspuren erkennbar, so dass nach der Lackierung auch Krater auftraten.

Die hier angeführten Beispiele belegen die hervorragende Wirkung der erfindungsgemäßen Zubereitungen und ihre problemlose Anwendung. Für den Anwender ergibt sich der Vorteil, dass wasser- und emulgatorfreie Zubereitungen verwendet werden, die hervorragende Verlaufseigenschaften aufweisen und eine spätere Nachbehandlung mit Pressluft nicht mehr erforderlich machen mit dem weiteren Vorteil, dass nunmehr ein migrationsstabiler Film vorliegt, der keine Lackstörungen verursachen kann. Somit kann die Verwendung dieser Gleit- und Beschichtungsmittel den Stand der Technik erheblich verbessern.

## Patentansprüche

1. Verwendung von lösemittel-, wasser- und emulgatorfreien Zubereitungen zur reibungsvermindernden Beschichtung von gummielastischen Profilen, enthaltend
(a) 0,5 bis 35, vorzugsweise 2 bis 5 Gew.-Teilen eines härtbaren Siloxans und
(b) 65 bis 99,5, vorzugsweise 95 bis 98 Gew.-Teilen niedermolekularen flüchtigen Siliconölen der allgemeinen Formel (I) und/oder cyklische Verbindungen der allgemeinen Formel (Ia) 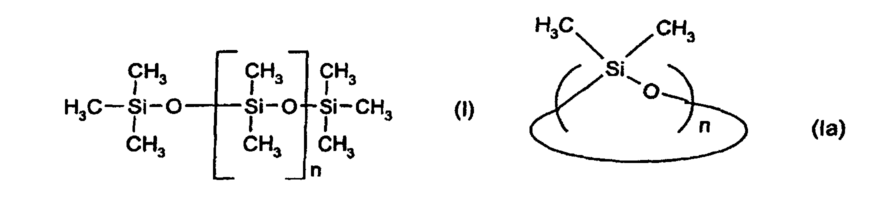 wobei
n eine Zahl von 2 bis 10, für die linearen Verbindungen und für die cyclischen Verbindungen vorzugsweise > 4, ist und gegebenenfalls
(c) üblichen Hilfs- und Zusatzstoffen.

2. Verwendung von lösemittel-, wasser- und emulgatorfreien Zubereitungen gemäß Anspruch 1, **dadurch gekennzeichnet, dass** sie einen Härtungskatalysator enthalten.

3. Verwendung von lösemittel-, wasser- und emulgatorfreien Zubereitungen gemäß Ansprüche 1 und 2, **dadurch gekennzeichnet, dass** als flüchtige niedermolekulare Siliconöle, Dimethylpolysiloxane der allgemeinen Formel (I) 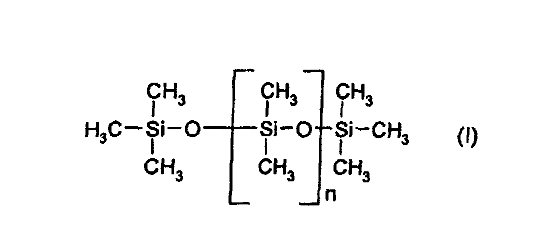 in der
n eine Zahl von 2 bis 5 ist, mitverwendet werden.

4. Verwendung von lösemittel-, wasser- und emulgatorfreien Zubereitungen gemäß Anspruch 3, **dadurch gekennzeichnet, dass** als flüchtige niedermolekulare Siliconöle, cyclische Polysiloxane der allgemeinen Formel (Ia) 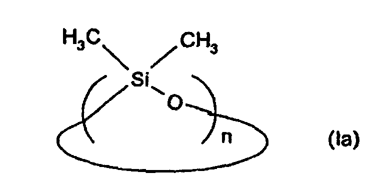 in der
n 5 und/oder 6 ist, mitverwendet werden.

5. Verwendung von lösemittel-, wasser- und emulgatorfreien Zubereitungen gemäß Anspruch 3, **dadurch gekennzeichnet, dass** als flüchtige niedermolekulare Siliconöle, Decamethylpentacyclosiloxan mitverwendet wird.

6. Verwendung von lösemittel-, wasser- und emulgatorfreien Zubereitungen gemäß Ansprüche 3 bis 5, **dadurch gekennzeichnet, dass** als flüchtige niedermolekulare Siliconöle, Mischungen aus linearen und cyclischen Siliconölen mitverwendet werden.

7. Verwendung von lösemittel-, wasser- und emulgatorfreien Zubereitungen gemäß Ansprüche 3 bis 5, **dadurch gekennzeichnet, dass** die flüchtigen niedermolekularen Siliconöle einen Flammpunkt von größer 55 °C aufweisen.

## Claims

1. The use of solvent-, water- and emulsifier-free preparations for the friction-reducing coating of rubber profiles, comprising
(a) 0.5 to 35, preferably 2 to 5 parts by weight of a curable siloxane and
(b) 65 to 99.5, preferably 95 to 98, parts by weight of low molecular weight volatile silicone oils of the general formula (I) and/or cyclic compounds of the general formula (Ia) 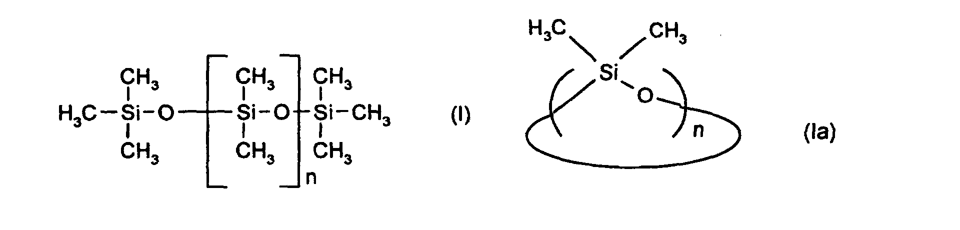 where
n is a number from 2 to 10 for the linear compounds and for the cyclic compounds preferably > 4, and, if appropriate,
(c) customary auxiliaries and additives.

2. The use of solvent-, water- and emulsifier-free preparations as claimed in claim 1, which contain a curing catalyst.

3. The use of solvent-, water- and emulsifier-free preparations as claimed in claims 1 and 2, wherein, as volatile low molecular weight silicone oils, dimethylpolysiloxanes of the general formula (I) 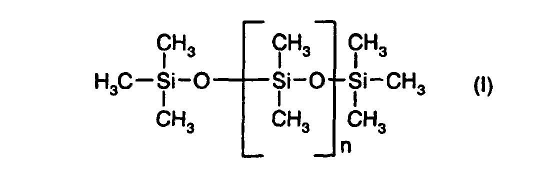 in which
n is a number from 2 to 5, are additionally used.

4. The use of solvent-, water- and emulsifier-free preparations as claimed in claim 3, wherein, as volatile low molecular weight silicone oils, cyclic polysiloxanes of the general formula (Ia) 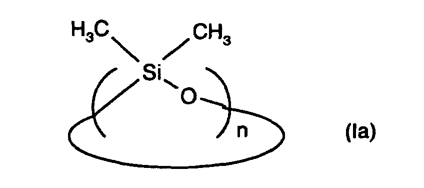 in which
n is 5 and/or 6, are additionally used.

5. The use of solvent-, water- and emulsifier-free preparations as claimed in claim 3, wherein, as volatile low molecular weight silicone oils, decamethylpentacyclosiloxane is additionally used.

6. The use of solvent-, water- and emulsifier-free preparations as claimed in claims 3 to 5, wherein, as volatile low molecular weight silicone oils, mixtures of linear and cyclic silicone oils are additionally used.

7. The use of solvent-, water- and emulsifier-free preparations as claimed in claims 3 to 5, wherein the volatile low molecular weight silicone oils have a flashpoint of greater than 55°C.

## Revendications

1. Usage de compositions sans solvant, sans eau et sans émulsifiant, pour le revêtement réduisant le frottement de profilés à élasticité caoutchoutique, contenant :
(a) 0,5 à 35, de préférence 2 à 5 parties en poids, d'un siloxane durcissable, et
(b) 65 à 99,5, de préférence 95 à 98 parties en poids d'huiles siliconées volatiles, de bas poids moléculaire, répondant à la formule générale (I) et/ou de composés cycliques répondant à la formule générale (Ia) 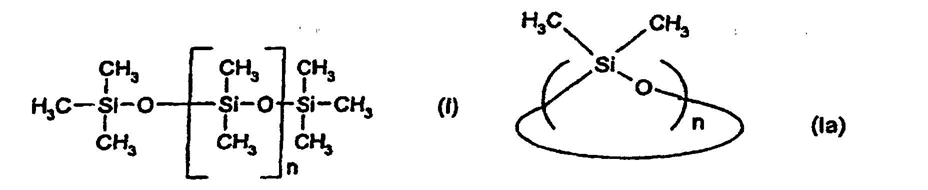 dans lesquelles :
n est un nombre de 2 à 10, pour les composés linéaires et pour les composés cycliques, de préférence, > 4 et le cas échéant,
(c) des adjuvants et des additifs courants.

2. Usage de compositions sans solvant, sans eau et sans émulsifiant selon la revendication 1, **caractérisées en ce qu'**elles contiennent un catalyseur de durcissement.

3. Usage de compositions sans solvant, sans eau et sans émulsifiant selon les revendications 1 et 2, **caractérisées en ce que** l'on utilise, comme huiles siliconées volatiles de bas poids moléculaire, des diméthylpolysiloxanes répondant à la formule générale (I) 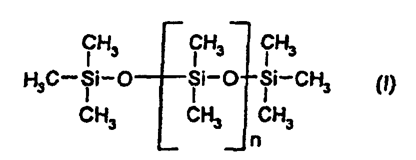 dans laquelle :
n est un nombre de 2 à 5.

4. Usage de compositions sans solvant, sans eau et sans émulsifiant selon la revendication 3, **caractérisées en ce que** l'on utilise conjointement, comme huiles siliconées volatiles de bas poids moléculaire, des polysiloxanes cycliques répondant à la formule générale (Ia) 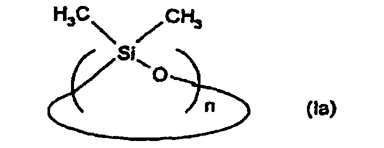 dans laquelle :
n est égal à 5 et/ou 6.

5. Usage de compositions sans solvant, sans eau et sans émulsifiant selon la revendication 3, **caractérisées en ce que** l'on utilise conjointement, comme huiles siliconées volatiles de bas poids moléculaire, du décaméthylpentacyclosiloxane.

6. Usage de compositions sans solvant, sans eau et sans émulsifiant selon les revendications 3 à 5, **caractérisées en ce que** l'on utilise conjointement, comme huiles siliconées volatiles de bas poids moléculaire, des mélanges d'huiles siliconées linéaires et cycliques.

7. Usage de compositions sans solvant, sans eau et sans émulsifiant selon les revendications 3 à 5, **caractérisées en ce que** les huiles siliconées volatiles de bas poids moléculaire ont un point d'inflammation supérieur à 55 °C.
